# EUROPÄISCHE PATENTSCHRIFT

(11) **EP 0 427 673 B1**
(45) Veröffentlichungstag und Bekanntmachung des Hinweises auf die Patenterteilung: **27.07.1994**
(21) Anmeldenummer: 90810840.0
(22) Anmeldetag: 01.11.1990
(51) Int. Cl.: B65G 21/14, B65G 41/00, E04G 21/04

(54) **Fördereinrichtung, insbesondere zur Förderung von Beton und Schüttgut**
Conveyor device, in particular for conveying concrete and/or bulk material
Dispositif de transport en particulier pour le transport de béton ou de la matière en vrac

(30) Priorität: 07.11.1989 CH 4011/89
(43) Veröffentlichungstag der Anmeldung: 15.05.1991
(73) Patentinhaber: EMIL GISLER AG MASCHINENBAU UND HYDRAULIK, CH-6462 Seedorf (CH)
(72) Erfinder: Gisler, Emil, CH-6462 Seedorf (CH)
(74) Vertreter: Keller, René, Dr.

(56) Entgegenhaltungen:
- DE-A- 2 520 565
- DE-B- 1 556 727
- FR-A- 2 507 529
- GB-A- 1 146 895
- GB-A- 1 271 008
- GB-A- 2 136 753
- US-A- 3 826 353

## Beschreibung

Die Erfindung betrifft eine Fördereinrichtung gemäß dem Oberbegriff des Patentanspruchs 1.

Aus der GB-A-2 136 753 ist eine gattungsgemäße Fördereinrichtung zur Forderung von Beton beschrieben. Die bekannte Fördereinrichtung ist auf einem Kraftfahrzeug montiert und hat mehrere teleskopartig ausfahrbaren Ladebaumteile. Am Ende des letzten ausfahrbaren Ladebaumteils ist ein gegenüber den ausfahrbaren Ladebaumteilen schwenkbarer weiterer Ladebaumteil vorhanden. Das dem weiteren Ladebaumteil entgegengesetzte Ende der teleskopartig ausfahrbaren Ladebäume ist schwenkbar an einem Drehgestell zur Höhenverstellung des freien Endes des aus den Ladebaumteilen gebildeten Ladebaums angeordnet. Diese Höhenverstellung erfolgt über am Ladebaum angeordnete Halteseile. Auch der teleskopartige Auszug wird mittels eines Zugseils durchgeführt. Die beiden Ladebaumenden werden mit einem einzigen Fördermittel für die Betonförderung überspannt.

Eine weitere Fördereinrichtung mit drei Ladebaumteilen ist aus der US-A 3 826 353 bekannt. Ein erster Ladebaumteil ist aus einem Ende des zweiten teleskopartig ausziehbar, während das andere Ende des zweiten Ladebaums am einen Ende des dritten Ladebaumteils in der Höhe schwenkbar gelagert ist. Alle Ladebaumteile werden mit einem einzigen Fördermittel überspannt. Ein Zugmittel für den teleskopartigen Auszug ist nicht vorhanden.

Der Erfindung liegt die Aufgabe zugrunde, eine Fördereinrichtung, insbesondere für Beton und Schüttgut zu schaffen, welche gegenüber der bekannten Fördereinrichtung bedeutend größere Höhen- und Entfernungsverstellmöglichkeiten für das freie Ladebaumende aufweist, wodurch zwischen dem Verteilungsort und einem Schüttort befindliche räumliche Hindernisse einfach überbrückt werden können.

Die Lösung der Aufgabe ist Gegenstand des Patentanspruchs 1.

In den Patentansprüchen 2 bis 13 sind bevorzugte Ausführungsarten der erfindungsgemäßen Fördereinrichtung beschrieben.

Im folgenden wird ein Beispiel der erfindungsgemäßen Fördereinrichtung anhand von Zeichnungen näher erläutert. Es zeigen:
- Fig. 1: eine Fördereinrichtung auf einem Lastkraftwagen in ausgefahrenem Zustand,
- Fig. 2: den Förderbandverlauf der Fördereinrichtung mit horizontal liegenden Ladebäumen, wobei der Übersichtlichkeit wegen die Kolben-Zylinder-Einheiten zur Verstellung der Ladebäume nur angedeutet sind,
- Fig. 3: den Seilverlauf zur teleskopartigen Verschiebung der Ladebäume, dargestellt in vollständig ausgezogener horizontaler Lage,
- Fig. 4: die Befestigung der Seilenden des in Figur 3 dargestellten Seilverlaufs sowie zwei Ladebäume und einen schwenkbaren Fachwerkausleger, und
- Fig. 5: einen Ausschnitt aus dem in Figur 2 dargestellten Förderbandverlauf zwischen zwei Ladebäumen.

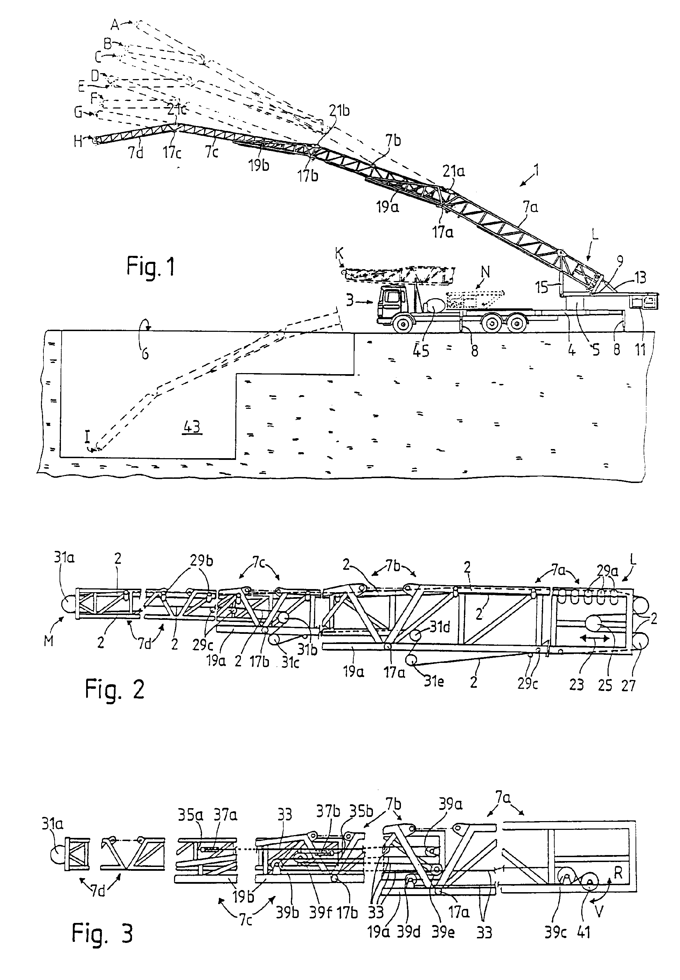

In **Figur 1** ist eine Fördereinrichtung **1** für Beton oder Schüttgut (Erz, Kohle, Getreide, Sand, Kies, Erde, ...) mit einem endlosen Förderband **2** montiert auf einem Lastkraftwagen **3** im vollständig ausgezogenen Zustand **H** dargestellt. Die gestrichelten Lagen deuten einige der möglichen Schwenklagen **A** bis **I** an. Im Zustand **K** ist die Fördereinrichtung **1** vollständig eingezogenen in Transportlage angedeutet.

Auf dem hinteren Teil des Chassis des Lastkraftwagen **3** ist die Fordereinrichtung **1** auf einem Ausziehteil **4** mit ihrem Drehgestell **5** um dessen vertikale Achse drehbar gelagert. (Der Ausziehteil **4** ist in **Figur 1** im ausgezogenen Zustand dargestellt und wird in der Transportlage **K** eingezogen; siehe Stellung **N**). Der Ausziehteil **4** und das Chassis des Lastkraftwagens **3** sind auf dem Boden **6** mit ausklappbaren Stützen **8** abgestützt. Auf dem Drehgestell **5** ist ein unterster **7a** von vier teleskopartig ineinander verschiebbaren Ladebäumen **7a** bis **7d** mit einem Gelenk **9** vertikal schwenkbar gelagert. Die Ladebäume **7a** bis **7d** sind als Fachwerkträger mit quaderförmigem Querschnitt ausgebildet. Ein Ausgleichsgewicht **11** zur Erzeugung eines Gegenmoments zum Moment der ausgezogenen Ladebäume **7a** bis **7d** zum Gelenk **9** ist über eine hydraulische Kolben-Zylinder-Einheit **13** mit dem untersten Ladebaum **7a** verbunden. Die Lage des untersten Lagebaums **7a** ist mit einer Kolben-Zylinder-Einheit **15** vertikal verstellbar, wobei während des Verstellvorgangs die Kolben-Zylinder-Einheit **13** immer so verstellt wird, daß das Ausgleichsgewicht **11** mit maximalem Moment auf den untersten Ladebaum **7a** wirkt.

Am vorderen Ende der Ladebäume **7a** und 7b ist je ein um je ein Gelenk **17a** bzw. **17b** schwenkbarer, dreieckförmiger Fachwerkausleger **19a** und **19b** als Träger gelagert. Zwischen der der Dreiecksgrundlinie gegenüberliegenden Ecke des Fachwerkauslegers **19a** bzw. **19b** und der jeweiligen oberen vordersten Ecke des Ladebaums **7a** bzw. **7b** ist an beiden Seiten je eine hydraulische Kolben-Zylinder-Einheit **21a** und **21b** zum vertikalen Schwenken des betreffenden Fachwerkauslegers **19a** bzw. **19b** angebracht. In **Figur 1** ist jeweils nur die in Fahrtrichtung linke Kolben Zylinder-Einheit **21a** bzw. **21b** zu sehen; die entsprechenden auf der rechten Seite sind nicht dargestellt. Der Ladebaum **7d** ist am oberen Ende des Ladebaums **7c** mit einem Gelenk **17c** schwenkbar gelagert und durch eine Kolben-Zylinder-Einheit **21c** vertikal verstellbar. Die in **Figur 1** dargestellten Schwenklagen **A** bis **H** stellen die Extremlagen dar, welche durch Verstellen der Ladebäume **7b**, **7c** und **7d** nur mit den Kolben-Zylinder-Einheiten **17a**, **17b** und **17c** erreichbar sind. Die Differenz zwischen den Lagen **A** und **H** gibt an, wie hoch maximal ein Hindernis sein darf, um mit der Fördereinrichtung **1** überbrückt zu werden. Der restliche Raumbereich zwischen den Lagen **H** und **I** wird mit Hilfe einer Schwenkung des Ladebaums **7a** um sein Gelenk **9** mit Hilfe der Kolben-Zylinder-Einheit **15** bedient.

Der Verlauf des endlosen Förderbandes **2** ist in **Figur 2** bei vollständig ausgezogenen Ladebäumen **7a** bis **7d** in horizontaler Lage dargestellt. Der Längenausgleich des Förderbandes **2** beim Schwenken der Ladebäume **7b**, **7c** (und/oder **7d** wird durch Verstellen in Pfeilrichtung **23** einer Umlaufrolle **25**, um die das Förderband **2** läuft am hinteren Ende des Ladebaums **7a**, erreicht. Ebenfalls am hinteren, unteren Ende des Ladebaums **7a** ist eine Antriebsrolle **27** angebracht. An der Oberseite der Ladebäume **7a**, **7b**, **7c** und **7d** wird das Förderband **2** über eine Vielzahl von jeweils zu dritt muldenförmig angeordneten Laufrollen **29a** und **29b** geführt. Am hinteren Teil des Ladebaums **7a** sind fünf Laufrollentrippel **29a** mit kleinen gegenseitigen Abständen angeordnet, um die Wucht des auf dieser Stelle **L** auftreffenden Betons oder Schüttguts aus einer nicht dargestellten Einfüllöffnung ohne Beschädigung des Förderbandes auffangen zu können. Die restlichen Laufrollentrippel **29b** sind schwächer ausgeführt, da sie nur noch das Förderband **2** führen.

Die Rückführung des Förderbandes erfolgt an der Unterseite der Ladebäume **7a**, **7b**, **7c** und **7d** mit zylindrischen Laufrollen **29c**. Am vorderen Ende des Ladeträgers **7d** wird das Förderband **2** durch eine Umlenkrolle **31a** umgelenkt. An der Stelle **L** aufgebrachtes Schüttgut oder Beton verläßt das Förderband **2** an der Umlenkrolle **31a**.

Von der Umlenkrolle **31a** verläuft das Förderband zur Umlenkrolle **31b** am hinteren Ende des Ladebaums **7c**, von hier zur Umlenkrolle **31c** am vorderen Ende des Ladebaums **7b**, dann zur Umlenkrolle **31d** am hinteren Ende des Ladebaums **7b**, dann zur Umlenkrolle **31e** am vorderen Ende des Ladebaums **7a** und von hier zur Antriebsrolle **27**.

Mit einem in **Figur 3** dargestellten Seil **33** als Zugmittel ist der Ladebaum **7c** in den Ladebaum **7b** und der Ladebaum **7b** in den Ladebaum **7a** teleskopartig einziehbar. Zur besseren Darstellung ist das Seil **33** vor den Fachwerkträgern der Ladebäume **7a** bis **7c** dargestellt. Die beiden Enden **35a** und **35b** des Seils **33** sind am hinteren Ende des Ladebaums **7c** mit je einer Zugfeder **37a** und **37b** befestigt. Vom Ende **35a** aus läuft das Seil **33** zu einer Umlenkrolle **39a** am hinteren Ende des Ladebaums **7b**, von dort zu einer Umlenkrolle **39b** an hinteren Ende des Fachwerkauslegers **19b**, weiter zu einer Umlenkrolle **39c** am hinteren Ende des Ladebaums **7a** und schließlich zu einer Antriebsrolle **41** ebenfalls am hinteren Ende des Ladebaums **7a**. Von der Antriebsrolle **41** verläuft das Seil **33** um die Umlenkrolle **39c** zu einer Umlenkrolle **39d** am hinteren Ende des Fachwerkauslegers **19a**, von hier zu einer Umlenkrolle **39e** am hinteren Ende des Ladebaums **7b**, dann zu einer Umlenkrolle **39f** am hinteren Teil des Ladebaums **7c** und von dort über die Zugfeder **37b** zum am hinteren Ende des Ladebaums **7c** befestigten Seilende **35b**.

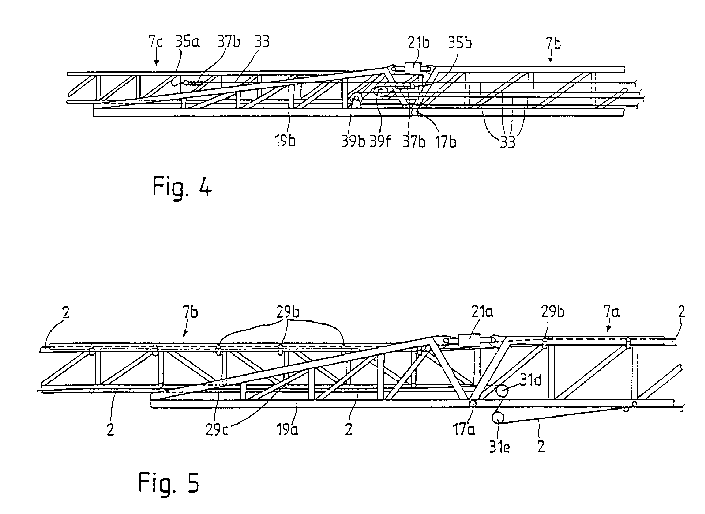

In **Figur 4** ist zum leichtern Verständnis der vollständige Fachwerkausleger **19b** mit den beiden Ladebäumen **7b** und **7c** sowie die Befestigung der beiden Seilenden **35a** und **35b** mit den Zugfedern **37a** und **37b** in horizontal ausgezogenem Zustand dargestellt. Rollen, auf denen der Ladebaum **7c** im Fachwerkausleger **19b** und im Ladebaum **7b** gleitet, sind nicht dargestellt. Die Kolbenzylindereinheit **21b** zum Schwenken des Fachwerkauslegers **19b** gegenüber dem Ladebaum **7b** ist ebenfalls dargestellt. Auch in **Figur 4** ist das Seil **33** zur besseren Verständlichkeit durchgezogen vor den Fachwerkträgern des Fachwerkauslegers **19b** und der Ladebäume **7b** und **7c** dargestellt.

In **Figur 5** ist der Verlauf des Förderbandes **2** am vorderen Teil des Ladebaums **7a** und im hinteren Teil des Ladebaums **7b** dargestellt. Der Ladebaum **7b** wird durch den Fachwerkausleger **19a**, der mittels der KolbenZylinder-Einheit **21a** vertikal schwenkbar ist, schwenkbar gehalten.

Zum Transport befindet sich die Fördereinrichtung **1** in der in **Figur 1** dargestellten Transportlage **K** auf dem Lastkraftwagen **3**; das Drehgestell **5** und das Ausgleichsgewicht **11** befinden sich in der Lage **N**. Zur Beförderung von Beton in eine in **Figur 1** dargestellt Baugrube **43** fährt der Lastkraftwagen **3** in die Nähe der Baugrube **43**. Das Drehgestell **5** und das Ausgleichsgewicht **11** werden in die in **Figur 1** dargestellte Position gebracht. Der Lastkraftwagen **3** und das Drehgestell **5** werden, wie ebenfalls in **Figur 1** dargestellt, mit den Stützen **8** auf dem Boden **6** abgestützt. Die Ladebäume **7a** bis **7d** werden im eingezogenen Zustand zusammen mit den Fachwerkauslegern **19a** und **19b** mit der Kolben-Zylinder-Einheit **15** leicht angehoben, gleichzeitig wird das Ausgleichsgewicht **11** mittels der Kolben-Zylinder-Einheit **13** in waagerechter Lage gehalten und durch horizontale Drehung mit dem Drehgestell **5** in Richtung auf die Baugrube **43** gedreht. Die Ladebäume **7a** bis **7d** werden teleskopartig ausgefahren, indem die Antriebsrolle **41** in Drehrichtung **V** gedreht wird. Die Fachwerkträger **19a** und **19b** halten, führen und stützen die auf ihnen verschiebbaren Ladebäume **7b** und **7c** ab und übertragen deren Drehmoment auf den benachbarten Fachwerkträger **7b** bzw. **7a**. Das Seil **33** zieht über die Umlenkrollen **39c**, **39d**, **39e** und **39f** den Ladebaum **7c** mit dem an seinem hinteren Ende befestigten Seilende **35b** aus dem Ladebaum **7b** heraus. Um den Weg, um den der Ladebaum **7c** nach vorn gezogen wird**,** verkürzt sich der Seilbereich zwischen dem Seilende **35b** und der Umlenkrolle **39f**. Um den gleichen Betrag verlängert sich aber der Seilbereich zwischen der Umlenkrolle **39f** und der Umlenkrolle **39e**; die Gesamtlänge des Seils **33** bleibt somit konstant. Beim teleskopartigen Ausziehen wird der Förderbandbereich des Förderbandes **2** zwischen der Ladestelle **L** und der Umlenkrolle **31a** größer, die Länge des Förderbandbereichs zwischen der Umlenkrolle **31a** und **31b** bleibt konstant und die Länge des Förderbandbereiches zwischen den Umlenkrollen **31b** und **31c** verkürzt sich in dem Maße wie sich der Förderbandbereich zwischen der Ladestelle **L** und der Umlenkrolle **31a** vergrößert; die Gesamtlänge des Förderbandes **2** bleibt somit ebenfalls konstant. Analoge Überlegungen gelten für den Auszug des Ladebaums **7b** aus dem Ladebaum **7a**.

Der Ladebaum **7c** wird bei vollständig eingezogenen Ladebäumen **7b** und **7c** zuerst ausgezogen, da sein Auflagegewicht zusammengesetzt aus seinem laufenden Gewicht sowie dem laufenden Gewicht des Ladebaums **7d** multipliziert mit der jeweiligen Hebelarmlänge zur Auflage auf den Fachwerkausleger **19b** kleiner und damit seine Reibung auf dem Fachwerkausleger **19b** ebenfalls kleiner ist als das Auflagegewicht des auf dem Fachwerkausleger **19a** aufliegenden Ladebaums **7b** zusammengesetzt aus seinem laufenden Gewicht sowie den laufenden Gewichten der Ladebäume **7c** und **7d** multipliziert mit der jeweiligen Hebelarmlänge.

Nach dem Ausziehen der Ladebäume **7c** und **7b** zur gewünschten Länge der Fördereinrichtung **1** wird der Ladebaum **7c** mit einer nicht dargestellten Verriegelungseinrichtung**,** um die Figuren **1** bis **5** nicht zu überladen, mit dem Fachwerkausleger **19b** gegen weiteres Ausfahren sowie Einziehen verriegelt. Analog wird der Ladebaum **7b** mit dem Fachwerkausleger **19a** verriegelt. Durch diese Verriegelung kann die Fördereinrichtung **1**, wie unten beschrieben, zwischen den Schwenklagen **A** bis **I** beliebig geschwenkt werden, ohne das bei teilweise ausgefahrener Fördereinrichtung **1** ein Nachrutschen des schwereren Ladebaums **7b** bei Schwenklagen unterhalb der Horizontalen befürchtet werden muß. Bei diesem Nachrutschen würde sich die Gesamtlänge der teilweise ausgefahrenen Fördereinrichtung **1** jedoch nicht verändern.

Die nicht dargestellte Verriegelungseinrichtung kann entweder eine lösbare kraftschlüssige Verriegelung z. B. eine Klemmeinrichtung oder eine lösbare formschlüssige Verriegelung z. B. Rasten haben.

Die Ladebäume werden soweit ausgezogen, bis die Umlenkrolle **31a**, d. h. die Ausladestelle **M** sich annähernd über dem Ort sich befindet, zu dem der Beton gefördert werden soll. Mit den Kolben-Zylinder-Einheiten **21a**, **21b** und **21c** werden nun die vollständig oder teilweise ausgezogenen Ladebäume **7b**, **7c** und **7d** nach deren Verriegelung so weit geneigt bis z. B. die in **Figur 1** dargestellte Lage I erreicht ist. Aufgrund der Neigung ergibt sich zwischen der Ladestelle **L** und der Umlenkrolle **31a** eine Längendifferenz dieses Förderbandbereiches, der durch Nachspannen des Förderbandes **2** mit der Umlaufrolle **25** als Spannvorrichtung ausgeglichen wird. Die Fördereinrichtung **1** befindet sich nun in ihrer Arbeitsposition, das Förderband **2** wird durch die Antriebsrolle **27** angetrieben und der Beton kann bei der Ladestelle **L** aufgebracht werden.

Mit der Fördereinrichtung **1** kann zu jedem Ort innerhalb des Raumbereichs zwischen den extremen Schwenklagen **A** und **I** Beton transportiert werden. Die Ladebäume **7** werden dann entsprechend des gewünschten Ortes ausgezogen.

Aufgrund des geringen Gewichtes des Ladebaums **7d** ist am oberen Ende des Ladebaumes **7c** kein Fachwerkausleger angeordnet. Die beiden Ladebäume **7c** und **7d** können auch zu einem einzigen Ladebaum zusammengefaßt werden, jedoch wird durch die Zweiteilung mit einer dazwischenliegenden Kolben-Zylinder-Einheit **21c** ein besseres "Anfahren" einer gewünschten Ausladeposition erreicht.

Auf dem Lastkraftwagen **3** ist ein Wasserreservoir **45** vorhanden, welches mit einer (nicht dargestellten) Reinigungsanlage verbunden ist, um nach der Förderung des Betons die auf dem Förderband **2** verbleibenden Reste abzuwaschen.

Die an den Seilenden **35a** und **35b** angeordneten Zugfedern **37a** und **37b** dienen ebenfalls zum Ausgleich von Längenänderungen aufgrund der Neigung zwischen den Umlenkrollen **39a** bis **39f**. Außerdem reduzieren die Zugfedern **37a** und **37b** Stöße, welche durch das Anzugsmoment der Antriebsrolle **41** entstehen könnten.

Anstelle ein einziges Seil **33** zu verwenden, können auch mehrere annähernd parallel laufende, dünnere Seile verwendet werden, welche auch aufgrund mechanischer Gegebenheiten über separat, aber auf demselben Ladebaum gelagerte Umlenkrollen geführt werden können.

Die Fördereinrichtung gestattet es, von einem Verteilungsort aus Beton oder Schüttgut zu einer höher oder tiefer liegenden Stelle, auch über Hindernisse hinweg, zu fördern. Auch kann der vorderste und der hinterste Ladebaum **7d** und **7a** durch geringfügige bauliche Veränderungen dahingehend abgeändert werden, daß auch aus einer Baugrube **43** Material heraus gefördert werden kann.

## Patentansprüche

1. Fördereinrichtung **(1)**, insbesondere zur Förderung von Beton und Schüttgut, mit einem einzigen umlaufenden Förderband **(2)** und mehreren Ladebäumen **(7a, 7b, 7c,** **7d)**, von denen wenigstens ein Teil **(7b, 7c)** mit einem Zugmittel **(33)** teleskopartig ein.und ausziehbar ist, **gekenn****zeichnet durch**
Schwenkeinrichtungen **(17a-c, 21a-c)** zum Gegeneinanderschwenken wenigstens eines Teils **(7b, 7c)** der teleskopartig ein.und ausziehbaren Ladebäume **(7b, 7c)**.

2. Fördereinrichtung **(1)** nach Anspruch 1, **dadurch gekennzeichnet**, daß wenigstens ein Teil der Ladebäume **(7b, 7c)** in ihrer augenblicklichen Ausziehlage einzeln oder gemeinsam ver- bzw. entriegelbar sind.

3. Fördereinrichtung **(1)** nach Anspruch 1 oder 2, **dadurch** **gekennzeichnet**, daß ein einziges, aus einem Seil **(33)** oder mehreren gleichsinnig nebeneinander laufenden Seilen bestehendes, um an den Ladebäumen **(7a, 7b, 7c)** angeordnete Umlenkrollen **(39a, 39b, 39c, 39d, 39e, 39f)** laufendes Zugmittel **(33)** vorgesehen ist, dessen beide Enden **(35a, 35b)** am äußersten ausziehbaren Ladebaum **(7c)** befestigt sind.

4. Fördereinrichtung **(1)** nach Anspruch 3, **dadurch gekennzeichnet**, daß die beiden Enden **(35a, 35b)** des Zugmittels **(33)** durch Zugfedern **(37a, 37b)** am äußersten ausziehbaren Ladebaum **(7c)** befestigt sind.

5. Fördereinrichtung **(1)** nach einem der Ansprüche 1 bis 4, **dadurch** **gekennzeichnet**, daß die Schwenkeinrichtungen **(17a-d, 21a-d)** an den vorderen Enden jedes der Ladebäume **(7a, 7b, 7c**) mit Ausnahme des äußersten **(7d)** zum Schwenken des bzw. der anschließenden Ladebäume **(7b, 7c, 7d)** gelagert sind.

6. Fördereinrichtung **(1)** nach einem der Ansprüche 1 bis 5, **dadurch gekennzeichnet**, daß jede Schwenkeinrichtungen für die schwenk- und ein- sowie ausziehbaren Ladebäume **(7b, 7c)** einen die Ladebäume abstützenden und führenden, schwenkbaren Träger **(19a, 19b)** hat, der jeweils am Ende des benachbarten Ladebaums **(7a, 7b)** angebracht ist, um welches die Schwenkung erfolgt.

7. Fördereinrichtung nach einem der Ansprüche 1 bis 6 **dadurch gekennzeichnet**, daß jede Schwenkeinrichtung(**17a-d, 21a-d**)mindestens eine Kolben-Zylinder-Einheit **(21a, 21b, 21c)** aufweist.

8. Fördereinrichtung nach einem der Ansprüche 1 bis 7 **dadurch gekennzeichnet**, daß der äußerste und der zweitäußerste Ladebaum **(7c, 7d)** gegeneinander schwenkbar und gemeinsam in den drittäußersten Ladebaum **(7b)** teleskopartig ein- und ausziehbar sind.

9. Fördereinrichtung **(1)** nach einem der Ansprüche 1 bis 8**,** **dadurch gekennzeichnet**, daß die Ladebäume **(7a, 7b, 7c, 7d)** mit einem Schwenkgelenk **(9)** auf einem um seine Achse drehbaren Drehgestell **(5)** gelagert sind.

10. Fördereinrichtung **(1)** nach einem der Ansprüche 1 bis 9**,** **dadurch gekennzeichnet**, daß ein Ausgleichsgewicht **(11)** vorgesehen ist, und daß der hinterste Ladebaum **(7a)** und das Ausgleichsgewicht **(11)** in bezug aufeinander vertikal schwenkbar sind.

11. Fördereinrichtung **(1)** nach den Ansprüchen 9 und 10**,** **da****durch gekennzeichnet,** daß das Ausgleichsgewicht **(11)** vorzugsweise schwenkbar am Drehgestell **(5)** gelagert ist.

12. Fördereinrichtung **(1)** nach einem der Ansprüche 1 bis 11**,** **dadurch gekennzeichnet,** daß das endlos umlaufende Förderband **(2)** durch eine Spannvorrichtung **(25)** gespannt ist.

13. Fördereinrichtung **(1)** nach einem der Ansprüche 1 bis 12 montiert auf einem Fahrzeug **(3)** zum ortsveränderlichen Einsatz vom Fahrzeug **(3)** aus.

## Claims

1. A conveyor (1), for conveying concrete and bulk goods in particular, with a single circulating belt conveyor (2) and several derricks (7a, 7b, 7c, 7d), at least a part of which (7b, 7c) is telescopically extendable and retractable by means of a pulley (33), characterised in that it has swivel mechanisms (17a-c, 21a-c) to cause at least one part (7b, 7c) of the telescopically extendable and retractable derricks (7b, 7c) to pivot towards the other.

2. A conveyor (1) in accordance with claim 1, characterised in that at least one part of the derricks (7b, 7c) in their temporary retracted position may be locked or unlocked singly or together.

3. A conveyor (1) in accordance with claim 1 or 2, characterised in that it is provided with a single circulating pulley mechanism (33) made from a cable (33) or several cables circulating alongside each other in the same direction around the pulleys (39a, 39b, 39c, 39d, 39e, 39f) on the derricks (7a, 7b, 7c), both ends of which (35a, 35b) are fixed to the extendable derrick (7c).

4. A conveyor (1) in accordance with claim 3, characterised in that the two ends (35a, 35b) of the pulley mechanism (33) are fixed to the exterior of the extendable derrick (7c) by means of tension springs (37a, 37b).

5. A conveyor (1) in accordance with one of claims 1 to 4, characterised in that the swivel mechanism (17a-d, 21a-d) on the front end of each of the derricks (7a, 7b, 7c) with the exception of the very end derrick (7d) are swivel-mounted with respect to the adjoining derricks (7b, 7c, 7d).

6. A conveyor (1) in accordance with one of claims 1 to 5, characterised in that each swivel mechanism for those derricks that can be swivelled, retracted and extended (7b, 7c) has a swivel-support (19a, 19b) bearing and guiding the derricks, which is fixed to the respective end of the adjacent derrick (7a, 7b), around which the swivel action is performed.

7. A conveyor in accordance with claims 1 to 6, characterised in that each swivel mechanism (17a-d, 21a-d) has at least one piston-cylinder unit (21a, 21b, 21c).

8. A conveyor in accordance with one of claims 1 to 7, characterised in that the furthest and penultimate derricks (7c, 7d) may be swivelled towards each other and may be telescopically retracted into and extended from the third outer derrick (7b) together.

9. A conveyor (1) in accordance with one of claims 1 to 8, characterised in that the derricks (7a, 7b, 7c, 7d) are mounted with a swivel drive (9) on a bogie (5) that rotates on its axis.

10. A conveyor (1) in accordance with one of claims 1 to 9, characterised in that a counterbalance (11) is provided and in that the furthest derrick (7a) and the counterbalance (11) may be swivelled vertically in relation to each other.

11. A conveyor (1) in accordance with claims 9 and 10, characterised in that the counterbalance (11) is preferably swivel-mounted on the bogie.

12. A conveyor (1) in accordance with one of claims 1 to 11, characterised in that the endless circulating belt conveyor (2) run is tightened by means of a tensioning device (25).

13. A conveyor (1) in accordance with claims 1 to 12, mounted on a vehicle (3) so that it may be used from the truck at different sites.

## Revendications

1. Dispositif de transport (1), notamment pour le transport du béton et de matières en vrac, équipé d'une seule bande transporteuse (2) en mouvement rotatif et de plusieurs potences de charge (7a, 7b, 7c, 7d), dont au moins une partie (7b, 7c) comporte un élément de traction (33) pouvant rentrer et sortir télescopiquement, caractérisé par des dispositifs basculants (17a-c, 21a-c) pour le basculement réciproque d'au moins une partie (7b, 7c) des potences de charge (7b, 7c) pouvant entrer et sortir télescopiquement.

2. Dispositif de transport (1) selon la revendication 1, caractérisé en ce qu'au moins une partie des potences de charge (7b, 7c) est verrouillable ou déverrouillable individuellement ou conjointement dans la position de sortie momentanée.

3. Dispositif de transport (1) selon la revendication 1 ou 2, caractérisé en ce qu'il est prévu un élément de traction (33) unique, constitué par un câble (33) ou par plusieurs câbles mobiles côte à côte dans le même sens, se déplaçant sur des galets de renvoi (39a, 39b, 39c, 39d, 39e, 39f) disposés sur les potences (7a, 7b, 7c), dont les deux extrémités (35a, 35b) sont fixées sur la partie extérieure extrême, coulissant en sortie.

4. Dispositif de transport (1) selon la revendication 3, caractérisé en ce que les deux extrémités (35a, 35b) du moyen de traction (33) sont fixées par les ressorts de traction (37a, 37b) sur la potence de charge extérieure extrême, coulissant en sortie (7c).

5. Dispositif de transport (1) selon l'une des revendications 1 à 4, caractérisé en ce que les dispositifs de basculement (17a-d, 21a-d) sont logés sur les côtés antérieurs de chacune des potences de charge (7a, 7b, 7c) à l'exception de la potence de charge extérieure extrême (7d) pour le basculement de la (ou des) potence(s) de charge contiguë(s) (7b, 7c, 7d).

6. Dispositif de transport (1) selon l'une des revendications 1 à 5, caractérisé en ce que chaque dispositif de basculement possède pour les potences de charge basculantes et coulissant en entrée ainsi que coulissant en sortie (7b, 7c), un support (19a, 19b) basculant, supportant et guidant les potences de charge, support qui est respectivement monté sur l'extrémité de la potence de charge avoisinante (7a, 7b) autour de laquelle s'effectue le basculement.

7. Dispositif de transport selon l'une des revendications 1 à 6, caractérisé en ce que chaque dispositif de basculement (17a-d, 21a-d) comporte au moins une unité piston-cylindre (21a, 21b, 21c).

8. Dispositif de transport selon l'une des revendications 1 à 7, caractérisé en ce que la potence de charge (7c, 7d) extérieure extrême et la deuxième potence de charge extérieure extrême sont basculantes réciproquement et sont aptes à coulisser télescopiquement et conjointement en entrée et en sortie dans la troisième potence de charge extérieure extême (7b).

9. Dispositif de transport (1) selon l'une des revendications 1 à 8, caractérisé en ce que les potences de charge (7a, 7b, 7c, 7d) sont logées avec une articulation basculante (9) sur un châssis de rotation (5) rotatif autour de son axe.

10. Dispositif de transport (1) selon l'une des revendications 1 à 9, caractérisé en ce qu'il est prévu un contrepoids (11) et en ce que la potence de charge arrière extrême (7a) et le contrepoids (11) sont basculants l'un par rapport à l'autre verticalement.

11. Dispositif de transport (1) selon les revendications 9 et 10, caractérisé en ce que le contrepoids (11) est de préférence logé de façon basculante sur le châssis rotatif (5).

12. Dispositif de transport (1) selon l'une des revendications 1 à 11, caractérisé en ce que la bande transporteuse (2) en mouvement rotatif sans fin est maintenue sous tension par un dispositif tendeur 25.

13. Dispositif de transport (1) selon l'une des revendications 1 à 12 monté sur un véhicule (3) pour la mise en oeuvre d'un véhicule (3) déplaçable de façon portative.
